# FASCICULE DE BREVET EUROPEEN

(11) **EP 3 390 160 B1**
(45) Date de publication et mention de la délivrance du brevet: **02.06.2021**
(21) Numéro de dépôt: 16825465.4
(22) Date de dépôt: 09.12.2016
(51) Int. Cl.: B60R 13/02

(54) **MODULE DE PANNEAU DE TOIT POUR VÉHICULE AUTOMOBILE**
DACHPANEELMODUL FÜR EIN KRAFTFAHRZEUG
ROOF PANEL MODULE FOR A MOTOR VEHICLE

(30) Priorité: 16.12.2015 IN 6734CH2015; 27.01.2016 FR 1650655
(43) Date de publication de la demande: 24.10.2018
(73) Titulaire: Renault S.A.S., 92100 Boulogne-Billancourt (FR)
(72) Inventeur: GODAVARI, Balaji Sai Kiran, Hyderabad Telangana 500019 (IN); JHA, Brijesh, New Delhi 110037 (IN)
(86) Numéro de dépôt international: PCT/FR2016/053299
(87) Numéro de publication internationale: WO 2017/103388

(56) Documents cités:
- EP-A2- 1 088 749
- DE-A1- 19 932 949
- FR-A1- 2 529 844
- JP-A- 2002 012 092
- JP-A- 2009 241 692
- US-A1- 2006 103 172

## Description

La présente invention concerne de manière générale un véhicule automobile, et plus particulièrement un module de panneau de toit et son installation sur un véhicule automobile.

Généralement, les véhicules sont pourvus d'un module de panneau de toit monté au sommet de la carrosserie, destiné à fermer l'ouverture qui est définie par un cadre de toit rigide.

En général, le module de panneau de toit comprend un panneau supérieur de toit, tourné vers l'extérieur du véhicule, et une garniture de toit placée contre le panneau supérieur de toit, tourné vers l'intérieur du véhicule.

La garniture de toit, utilisée principalement pour isoler l'intérieur de l'habitacle, notamment au niveau phonique, est aussi utilisée pour sa fonction esthétique.

Toutefois, le module de panneau de toit est généralement constitué d'un grand nombre d'éléments, ce qui rend son assemblage long et compliqué, et il comprend plusieurs lignes de séparation, visibles dans l'habitacle, qui posent un problème esthétique Le document FR 2 529 844 A1 divulgue un véhicule automobile conforme au préambule de la revendication 1.

Par conséquent, la présente invention a pour but de résoudre ces problèmes en fournissant un module de panneau de toit qui comprend un nombre réduit d'éléments et de lignes de séparation, facile à installer dans la partie haute de la carrosserie du véhicule.

Pour résoudre ce problème technique, un véhicule automobile est proposé avec les caractéristiques de la revendication 1.

La charnière flexible facilite l'installation de la garniture et, notamment son pliage. La configuration de la garniture, ayant une partie mince et étant faite d'une seule pièce, permet une fabrication facile et économique tout en fournissant une garniture résistante et efficace. De plus, grâce à l'extrémité libre disposée dans le renfoncement de la carrosserie supérieure du véhicule, la garniture est fixée de manière efficace.

En outre, la charnière peut être formée par une partie plus mince que les parties centrale et périphérique.

Selon l'invention, l'élément de support est placé entre le panneau supérieur extérieur et la garniture de toit de façon à relier la garniture au panneau supérieur extérieur. Ainsi, la garniture peut être fixée de manière efficace en dépit de l'architecture complexe et non linéaire de la carrosserie et du panneau supérieur extérieur, sans utiliser des nombres différents d'éléments de garniture et de lignes de séparation.

De préférence encore, l'extrémité libre de la partie périphérique de la garniture est courbée, ce qui améliore le contact de la garniture avec le renfoncement de la carrosserie du véhicule et facilite son pliage pendant son installation.

De manière avantageuse, la garniture est formée par une mousse de polyuréthane. Cette matière est particulièrement avantageuse pour obtenir une garniture légère, flexible et isolante.

Par ailleurs, l'élément de support peut être formé par un matériau de type polypropylène, qui est économique et résistant.

D'autres avantages et caractéristiques de l'invention apparaîtront à la lecture de la description détaillée d'un mode de réalisation de l'invention, qui est un exemple non limitatif, illustré sur les dessins annexés, dans lesquels :
- la figure 1 est une vue en coupe transversale du sommet d'une carrosserie de véhicule et une vue en coupe transversale d'un module de panneau de toit selon l'invention, avant l'installation de ce dernier sur la carrosserie de véhicule ;
- la figure 2 est une vue en coupe transversale du sommet de la carrosserie de véhicule et du mode de réalisation du module de panneau de toit selon la figure 1, dans une première étape d'installation ;
- la figure 3 est une vue en coupe transversale du sommet de la carrosserie de véhicule et du mode de réalisation du module de panneau de toit selon la figure 1, dans une deuxième étape d'installation ;
- la figure 4 est une vue en coupe transversale du mode de réalisation du module de panneau de toit selon la figure 1 au sommet de la carrosserie de véhicule, une fois que l'installation est terminée.

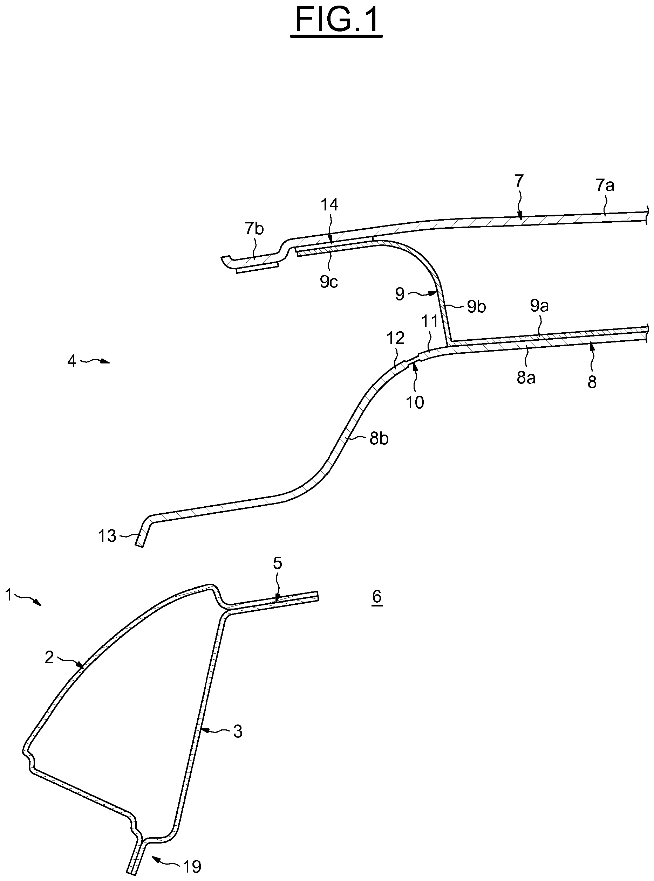

Comme exemple illustré sur les figures 1 à 4, le sommet d'une carrosserie de véhicule 1 comprend un panneau latéral extérieur 2 et un panneau latéral intérieur 3. Les parties supérieures des panneaux latéraux 2 et 3 sont reliées et forment un cadre de toit rigide horizontal 5 qui définit une ouverture 6. Les parties inférieures des panneaux latéraux 2 et 3 sont aussi reliées et forment un renfoncement 19.

Un module de panneau de toit 4 selon l'invention comprend un panneau supérieur extérieur 7, une garniture de toit 8 et un élément de support 9.

La garniture 8 comprend une partie centrale 8a et une partie périphérique 8b, ces deux parties étant reliées entre elles par une charnière flexible 10. En outre, la partie périphérique 8b, la partie centrale 8a et la charnière 10 sont formées d'une seule pièce dans laquelle la partie charnière 10 peut être plus mince que les deux autres parties 8a et 8b. Par ailleurs, l'extrémité libre 13 de la partie périphérique de garniture 8b est orientée vers le bas et peut être incurvée. De plus, la partie 8b s'étend vers le bas et peut comporter une courbure. La garniture 8 est de préférence une mousse de polyuréthane, ou est faite d'une autre matière flexible appropriée. En outre, ses dimensions sont avantageusement plus grandes que l'ouverture 6 de la carrosserie, et sont, plus avantageusement, au moins aussi grandes que l'intervalle qui sépare les deux panneaux latéraux intérieurs gauche et droit de la carrosserie de véhicule.

Le panneau supérieur extérieur 7 comprend une partie centrale 7a et une partie périphérique 7b, et il peut être fait d'une tôle métallique. Ses dimensions sont choisies de préférence de manière à être plus grandes que l'ouverture 6, et de préférence encore similaires aux dimensions du cadre de toit 5.

L'élément de support 9 est placé entre le panneau extérieur 7 et la garniture 8, et connecte les deux éléments. L'élément de support 9 peut comprendre trois parties. Dans l'exemple illustré, selon l'invention, une première partie 9a est fixée à la partie centrale 8a de la garniture 8 et s'étend le long de celle-ci. La charnière 10 est située près de la partie 9a, de sorte que l'élément de support 9 maintient de façon rigide la garniture 8 par sa partie 8a, et la partie 8b est impliquée dans le pliage. Une deuxième partie 9c est fixée à une portion de la partie 7a et s'étend le long de celle-ci, près de la partie 7b du panneau supérieur extérieur 7. Les deux parties 7a et 9c sont de préférence fixées au moyen d'un adhésif 14. Ensuite, les parties 9a et 9c sont reliées avec une troisième partie 9b, qui est, selon l'invention, approximativement perpendiculaire aux parties 9a et 9c afin de fournir un espace entre la garniture 8 et le panneau supérieur extérieur 7. Par conséquent, la garniture 8 est solidement maintenue sur le panneau supérieur extérieur 7, grâce à l'élément de support 9. Dans cet exemple, la jonction entre les deux parties 9c et 9b est courbée. Par ailleurs, l'élément de support 9 est avantageusement formé d'un matériau de type polypropylène.

La figure 1 représente indépendamment le sommet de la carrosserie 1 et le module de panneau de toit 4. La garniture de toit 8 est représentée dans un état de libération dans lequel, dans cet exemple, les extrémités 11 et 12 respectivement de la partie centrale 8a et de la partie périphérique 8b qui sont toutes deux connectées à la charnière 10, sont approximativement alignées avec cette dernière.

Avant son installation sur la carrosserie supérieure de véhicule 1, le module de panneau de toit 4 est soumis à une étape de pré-installation. La garniture est amenée dans un état plié. Pour réaliser cela, dans l'exemple illustré, la partie périphérique 8b de la garniture 8 est amenée vers le bas, ce qui est facilité par la charnière 10. Cette étape est réalisée avec un élément de montage 15 qui est par exemple un élément pourvu d'un côté 15a perpendiculaire à un autre côté adjacent 15b.

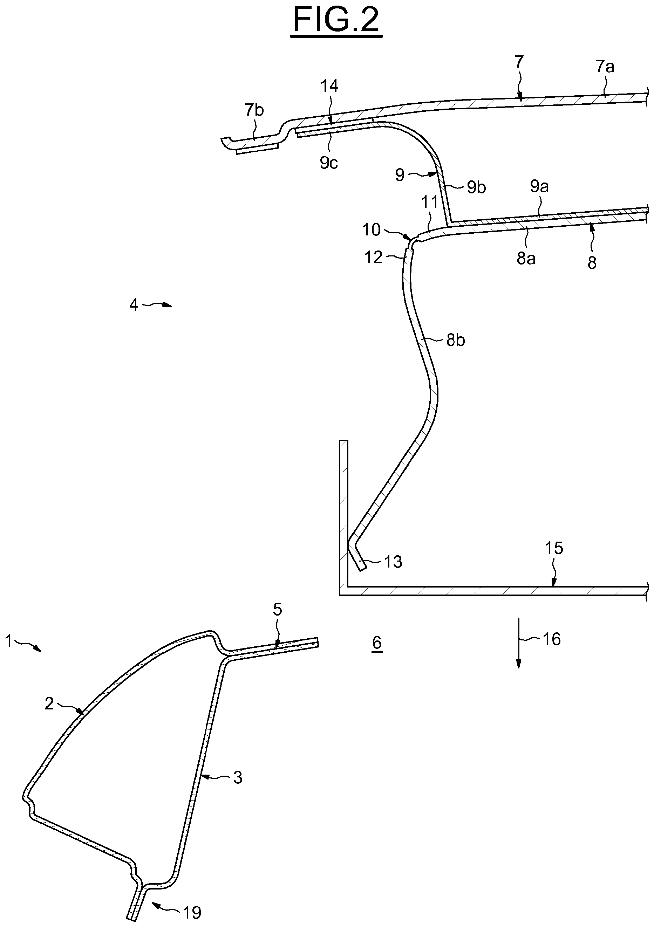

La configuration du module de panneau de toit 4 qui résulte de cette précédente étape est représentée sur la figure 2. L'élément de montage 15 maintient la garniture 8 dans un état plié, dans lequel la partie mince 10 est déformée. De cette façon, la garniture 8 a des dimensions moins grandes que l'ouverture 6 et elle peut passer par l'ouverture 6. A cet effet, on amène le module de panneau de toit 4 à proximité de la carrosserie supérieure 1, au-dessus de celle-ci, puis on le descend dans le cadre de toit 5 dans une direction verticale 16.

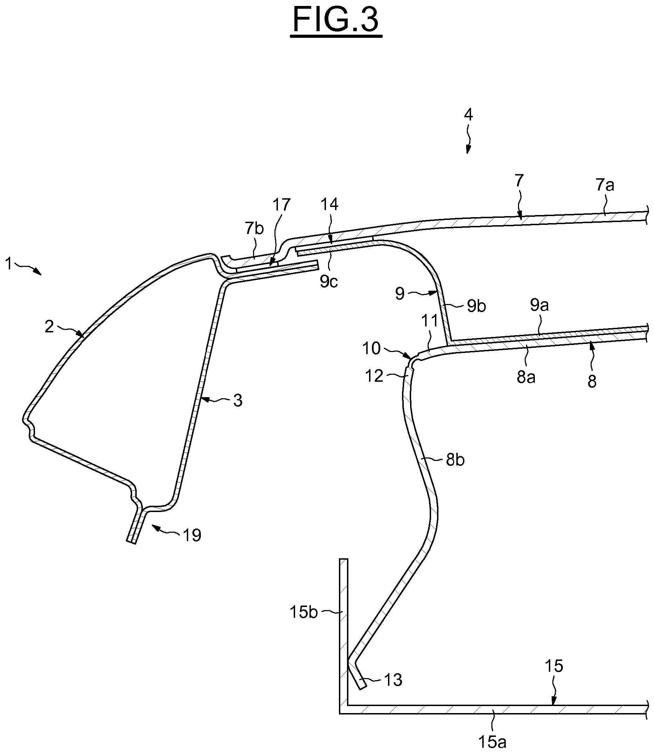

La figure 3 représente le module de panneau de toit 4 après qu'il ait été entièrement descendu dans le cadre de toit 5. La partie périphérique 7b du panneau supérieur extérieur 7 peut être fixée au cadre de toit 5 à l'aide d'un moyen de fixation comme un adhésif 17, placé au préalable. Les dimensions du panneau supérieur de toit 7 sont adaptées à celles du cadre de toit 5, ce qui permet la fermeture de l'ouverture 6.

Puis l'élément de montage 15 est retiré afin de libérer la garniture 8. Dans le module de panneau de toit 4 selon l'invention, la partie périphérique 8b de la garniture 8 revient facilement à un état non plié.

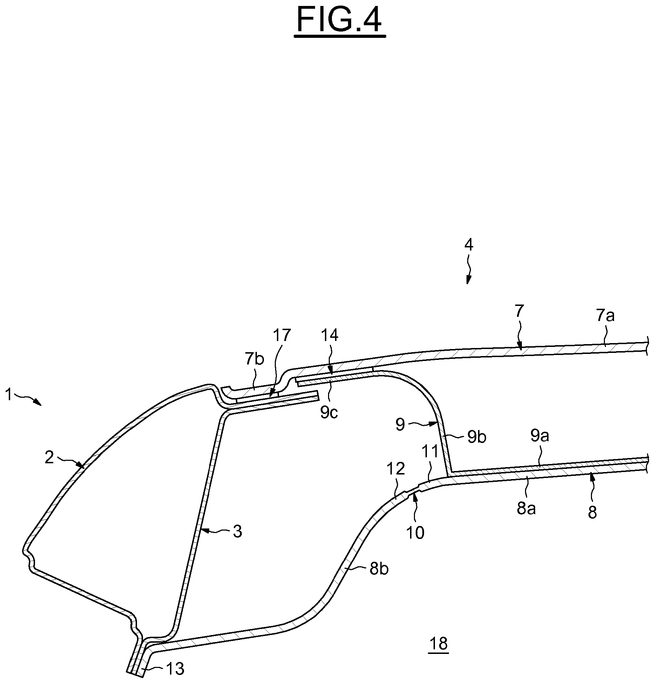

La figure 4 illustre une installation complètement terminée du module de panneau de toit 4. L'extrémité libre 13 de la partie périphérique 8b est insérée dans le renfoncement 19 des panneaux latéraux 2 et 3 et fixée dans ce dernier, de sorte que la garniture 8 isole complètement l'habitacle 18. L'insertion est réalisée sans que la garniture 8 ne soit soumise à un effort de flexion. La forme courbée de l'extrémité libre 13 améliore son contact avec le renfoncement 19. Ensuite la courbure est choisie de préférence pour s'adapter le mieux possible à la forme du renfoncement 19. Dans cette configuration, la partie périphérique 8b s'étend vers le bas, vers le renfoncement 19. De cette façon, dans l'exemple représenté, la partie périphérique 8b n'est pas en contact avec la surface du panneau intérieur 3, mais seulement avec le renfoncement 19.

De préférence, l'élément de montage 15 choisi peut être conçu pour être réutilisé pour d'autres installations de modules de panneaux de toit 4.

La présente invention permet donc une fabrication et une installation facile d'un module de panneau de toit 4. La conception en une pièce de la garniture de toit 8 et l'élimination des lignes de séparation et de nombreux éléments réduisent le temps d'installation du module de panneau de toit 4 sur la carrosserie supérieure du véhicule et son poids par rapport à une garniture conventionnelle.

## Revendications

1. Véhicule automobile comportant un module de panneau de toit (4) situé au sommet de la carrosserie (1) du véhicule, le sommet de la carrosserie de véhicule (1) comprenant un panneau latéral extérieur (2) et un panneau latéral intérieur (3) formant un cadre de toit (5), les parties inférieures des panneaux latéraux intérieur et extérieur (2, 3) étant connectées et formant un renfoncement (19), le module de panneau de toit (4) comprenant un panneau supérieur extérieur (7) et une garniture de toit (8), la garniture (8) comprenant une partie centrale (8a) et une partie périphérique (8b) ayant une extrémité libre (13) orientée vers le bas, les deux parties (8a, 8b) sont reliées entre elles par une charnière flexible (10), la partie périphérique (8b), la partie centrale (8a) et la charnière (10) étant formées d'une pièce, et l'extrémité libre (13) de la partie périphérique (8b) de la garniture (8) étant orientée vers le bas et fixée dans le renfoncement (19), **caractérisé en ce que** le panneau supérieur extérieur (7) comprenant une partie centrale (7a) et une partie périphérique (7b) fixée au cadre de toit (5), **en ce que** le module de panneau de toit (4) comprend un élément de support (9) placé entre le panneau supérieur extérieur (7) et la garniture de toit (8) de façon à relier la garniture (8) au panneau supérieur extérieur (7), l'élément de support comportant une première partie (9a) fixée à la partie centrale (8a) de la garniture, une deuxième partie (9c) fixée à une portion de la partie centrale (7a) du panneau supérieur extérieur (7), la deuxième partie (9c) s'étendant le long de celle-ci, près de la partie périphérique (7b) du panneau supérieur extérieur (7), les première et deuxièmes parties (9a, 9c) étant reliées avec une troisième partie (9b) approximativement perpendiculaire aux première et deuxième parties (9a, 9c) afin de fournir un espace entre la garniture (8) et le panneau supérieur extérieur (7).

2. Véhicule automobile selon la revendication 1, dans lequel la charnière (10) est formée par une partie plus mince que les parties centrale et périphérique (8a, 8b).

3. Véhicule automobile selon l'une quelconque des revendications précédentes, dans lequel au moins un panneau latéral (2, 3) comportant un renfoncement (19) et l'extrémité libre (13) de la partie périphérique (8b) de la garniture est courbée selon la forme du renforcement (19) de telle sorte qu'une fois la garniture (8) libérée, l'extrémité libre (13) de la garniture (8) est insérée dans ce renfoncement (19), la partie périphérique (8b) n'étant pas en contact avec la surface du panneau intérieur (3).

4. Véhicule automobile selon l'une quelconque des revendications précédentes, dans lequel la garniture (8) est formée par une mousse de polyuréthane.

5. Véhicule automobile selon la revendication 1, dans lequel l'élément de support (9) est formé par un matériau de type polypropylène.

## Patentansprüche

1. Kraftfahrzeug, das ein am oberen Ende der Karosserie (1) des Fahrzeugs gelegenes Dachpaneelmodul (4) aufweist, wobei das obere Ende der Fahrzeugkarosserie (1) ein äußeres seitliches Paneel (2) und ein inneres seitliches Paneel (3) umfasst, die einen Dachrahmen (5) bilden, wobei die unteren Teile der inneren und äußeren seitlichen Paneele (2, 3) zusammengefügt sind und eine Vertiefung (19) bilden, wobei das Dachpaneelmodul (4) ein äußeres oberes Paneel (7) und eine Dachdichtung (8) umfasst, wobei die Dichtung (8) einen Mittelteil (8a) und einen Umfangsteil (8b) mit einem nach unten gerichteten freien Ende (13) umfasst, wobei die beiden Teile (8a, 8b) untereinander durch ein flexibles Scharnierband (10) verbunden sind, wobei der Umfangsteil (8b), der Mittelteil (8a) und das Scharnierband (10) aus einem Stück gebildet sind, und das freie Ende (13) des Umfangsteils (8b) der Dichtung (8) nach unten gerichtet und in der Vertiefung (19) fixiert ist, **dadurch gekennzeichnet, dass** das äußere obere Paneel (7) einen Mittelteil (7a) und einen am Dachrahmen (5) befestigten Umfangsteil (7b) umfasst, dass das Dachpaneelmodul (4) ein Stützelement (9) umfasst, das zwischen dem äußeren oberen Paneel (7) und der Dachdichtung (8) so platziert ist, dass die Dichtung (8) mit dem äußeren oberen Paneel (7) verbunden ist, wobei das Stützelement einen ersten Teil (9a) umfasst, der am Mittelteil (8a) der Dichtung fixiert ist, einen zweiten Teil (9c), der an einem Abschnitt des Mittelteils (7a) des äußeren oberen Paneels (7) fixiert ist, wobei sich der zweite Teil (9c) entlang von diesem erstreckt, in der Nähe des Umfangsteils (7b) des äußeren oberen Paneels (7), wobei die ersten und zweiten Teile (9a, 9c) mit einem dritten Teil (9b) verbunden sind, das annähernd senkrecht zu den ersten und zweiten Teilen (9a, 9c) verläuft, um einen Raum zwischen der Dichtung (8) und dem äußeren oberen Paneel (7) bereitzustellen.

2. Kraftfahrzeug nach Anspruch 1, bei dem das Scharnierband (10) durch einen Teil gebildet wird, der dünner als die Mittel- und Umfangsteile (8a, 8b) ist.

3. Kraftfahrzeug nach einem der vorhergehenden Ansprüche, bei dem mindestens ein seitliches Paneel (2, 3) eine Vertiefung (19) aufweist und das freie Ende (13) des Umfangsteils (8b) der Dichtung entsprechend der Form der Vertiefung (19) derart gekrümmt ist, dass nach dem Freigeben der Dichtung (8) das freie Ende (13) der Dichtung (8) in diese Vertiefung (19) eingeführt ist, wobei der Umfangsteil (8b) mit der Fläche des inneren Paneels (3) nicht in Kontakt ist.

4. Kraftfahrzeug nach einem der vorhergehenden Ansprüche, bei dem die Dichtung (8) aus einem Polyurethanschaum gebildet ist.

5. Kraftfahrzeug nach Anspruch 1, bei dem das Stützelement (9) durch ein Material vom Polypropylentyp gebildet ist.

## Claims

1. Motor vehicle having a roof panel module (4) situated at the top of the body (1) of the vehicle, the top of the body of the vehicle (1) comprising an outer side panel (2) and an inner side panel (3) forming a roof frame (5), the lower portions of the inner and outer side panels (2, 3) being connected and forming a recess (19), the roof panel module (4) comprising an outer upper panel (7) and a roof liner (8), the liner (8) comprising a central part (8a) and a peripheral part (8b) having a free end (13) that is oriented downwardly, the two parts (8a, 8b) being connected together by a flexible hinge (10), the peripheral part (8b), the central part (8a) and the hinge (10) being formed in one piece, and the free end (13) of the peripheral part (8b) of the liner (8) being oriented downwardly and fixed in the recess (19), **characterized in that** the outer upper panel (7) comprises a central part (7a) and a peripheral part (7b) fixed to the roof frame (5), **in that** the roof panel module (4) comprises a support element (9) positioned between the outer upper panel (7) and the roof liner (8) so as to connect the liner (8) to the outer upper panel (7), the support element having a first part (9a) fixed to the central part (8a) of the liner, a second part (9c) fixed to a portion of the central part (7a) of the outer upper panel (7), the second part (9c) extending along the latter, close to the peripheral part (7b) of the outer upper panel (7), the first and second parts (9a, 9c) being connected to a third part (9b) approximately perpendicular to the first and second parts (9a, 9c) in order to provide a space between the liner (8) and the outer upper panel (7).

2. Motor vehicle according to Claim 1, wherein the hinge (10) is formed by a part that is thinner than the central and peripheral parts (8a, 8b).

3. Motor vehicle according to either one of the preceding claims, wherein at least one lateral panel (2, 3) has a recess (19) and the free end (13) of the peripheral part (8b) of the liner is curved according to the shape of the recess (19) such that once the liner (8) is released, the free end (13) of the liner (8) is inserted into this recess (19), the peripheral part (8b) not being in contact with the surface of the inner panel (3) .

4. Motor vehicle according to any one of the preceding claims, wherein the liner (8) is formed by a polyurethane foam.

5. Motor vehicle according to Claim 1, wherein the support element (9) is formed by a polypropylene-type material.
